# EUROPÄISCHE PATENTSCHRIFT

(11) **EP 0 922 934 B1**
(45) Veröffentlichungstag und Bekanntmachung des Hinweises auf die Patenterteilung: **13.02.2002**
(21) Anmeldenummer: 98440267.7
(22) Anmeldetag: 20.11.1998
(51) Int. Cl.: G01C 21/20

(54) **Verfahren zur Vorgabe von Positionsdaten**
Method for determining positional data
Méthode pour déterminer des données de position

(30) Priorität: 10.12.1997 DE 19754786
(43) Veröffentlichungstag der Anmeldung: 16.06.1999
(73) Patentinhaber: ALCATEL, 75008 Paris (FR)
(72) Erfinder: Oster, Martin, 2202 Königsbrunn (AT); Weisbier, Peter, 1030 Wien (AT); Schiehser, Günther, 1090 Wien (AT)
(74) Vertreter: Brose, Gerhard, Dipl.-Ing.

(56) Entgegenhaltungen:
- EP-A- 0 457 064
- EP-A- 0 471 405
- EP-A- 0 702 209
- EP-A- 0 715 285
- DE-A- 19 611 915

## Beschreibung

Die Erfindung betrifft ein Verfahren zur Vorgabe von Positionsdaten für mehrere Routen gemäß dem Oberbegriff des Anspruchs 1. Für das Flottenmanagement, im Bereich des öffentlichen Personen-Nah-Verkehrs ist es erforderlich, genaue Positionsdaten der zur befahrenden Route zur Verfügung zu haben. Beispielsweise müssen die Aktivierungspunkte zur Auslösung von LSA-Telegrammen (Licht-Signal-Anlage) zur Vorrangumschaltung von Ampelanlagen (LSA) mit geringer Toleranz reproduzierbar sein. Desweiteren können die Positionsdaten auch zur Steuerung einer optischen und/oder akustischen Haltestellensignalisierung innerhalb des Fahrzeuges wie auch zur Ansteuerung einer Ankunftsanzeige an den anzufahrenden Haltestellen verwendet werden. In Abhängigkeit von der momentanen Position des Fahrzeuges ergibt sich an den einzelnen Haltestellen eine bestimmte Wartezeit. Diese prognostizierte Wartezeit kann z.B. als "Ankunft in XY Minuten" angezeigt werden. Positionsdaten dienen außerdem zur Feststellung der Fahrplankonformität. Durch den Vergleich der Soll-Positionsdaten mit den Ist-Positionsdaten läßt sich auf einfache Weise eine Fahrplanabweichung - Verspätung oder Verfrühung - ermitteln, die dem Fahrer und ggf. auch den Fahrgästen signalisiert werden kann.

Aus der DE-A1-196 11 915 (D1) ist ein Verfahren zur Routenplanung zum Zwecke der Ermittlung einer optimalen Fahrtroute zwischen beliebigen Start- und Zielkoordinaten bekannt. Dazu ist eine Dienste-Zentrale vorgesehen, die auf eine Datenbank zurückgreift, welche Verkehrswege-Abschnitte in Form einzelner Wegesegmente beinhaltet. Ein solches, quasi alle Verkehrswege repräsentierendes Verkehrswegenetz ist zur Positionsdatenplanung für liniengebundene Fahrzeuge des öffentlichen Personen-Nahverkehrs nicht geeignet.

Die Positionsdaten-Verwaltung für mehrere Routen erfolgt bisher für jede einzelne Route separat. Für jede Route werden im wesentlichen äquidistante Positionsdaten festgelegt. Überschneidungen oder Mitbenutzungen von Positiondaten anderer Routen sind auch dann nicht vorgesehen, wenn die Routen nur in einem kleinen Teilabschnitt voneinander abweichen. Entsprechend groß ist das benötigte Datenvolumen. Nachteilig ist darüber hinaus die geringe Flexibilität hinsichtlich Routenveränderungen, insbesondere der Notwendigkeit von Umleitungsstrecken.

Der Erfindung liegt die Aufgabe zugrunde, ein Verfahren der gattungsgemäßen Art anzugeben, bei dem das benötigte Datenvolumen verringert ist und das sich durch Flexibilität im Sinne einfacherer Anpaßbarkeit an veränderte Bedingungen auszeichnet.

Die Aufgabe wird erfindungsgemäß durch die kennzeichnenden Merkmale des Anspruchs 1 gelöst. Durch die Einführung gemeinsamer Teilrouten, die quasi als ein Datensatz für mehrere Routen verwaltet werden, ergibt sich eine erhebliche Reduzierung des zu speichernden Datenvolumens. Auch Umleitungsstecken lassen sich problemlos in die Fahrtroutenbildung integrieren. Dabei lässt sich das zu verwaltende Datenvolumen geringer halten, wenn die Teilrouten, die die Umleitungsstecke bilden, zumindest teilweise bereits aus anderen Routen bekannt sind. Die Positionsdaten werden von einer Zentrale und/oder einem Bordcomputer des Fahrzeuges verwaltet.

Bei einer vorteilhaften Ausführungsform gemäß Anspruch 2 ist die Datenmenge auf jeweils nur maximal zwei Positionsdaten für jede Teilroute der Gesamtstrecke reduziert. Dabei genügt es, wenn lediglich die erste bzw. die letzte Teilroute zusätzlich durch den Anfangspunkt bzw. den Endpunkt charakterisiert ist. Außer dieser einen Teilroute sind die restlichen Teilrouten nur durch deren Anfangs- bzw. Endpunkt eindeutig definiert. Sämtliche Teilrouten können gleichzeitig als Datenbasis für weitere Routen dienen, indem der Anfangs- und der Endpunkt der gemeinsamen Teilrouten übernommen werden. Bei Zwischen-Teilrouten können die Anfangs- oder die Endpunkte benachbarter Teilrouten herangezogen werden.

Besonders interessant ist das beanspruchte Verfahren im Fall schienengebundener Routen gemäß Anspruch 3. Da beispielsweise ein Straßenbahnnetz auf feste Routen, die durch das Gleisnetz vorgegeben sind, beschränkt ist, können Teilrouten auf einfache Weise jeweils zwischen zwei Weiche definiert werden. Abzweigungen, die den Anfangspunkt bzw. den Endpunkt unterschiedlicher Teilrouten bilden, sind damit eindeutig identifiziert.

Die Positionsdaten werden gemäß Anspruch 4 routenspezifisch mittels mobiler Datenspeicher den auf der entsprechenden Route verkehrenden Fahrzeugen zur Verfügung gestellt. Fahrplanvorgaben unter Einbeziehung geplanter Umleitungsstrecken sind auf diese Art und Weise sehr flexibel umsetzbar.

Dabei ist gemäß Anspruch 5 für jede Route ein eigener mobiler Datenspeicher vorgesehen. Jedes Fahrzeug, das auf der entsprechenden Route verkehrt, kann somit schnell und parallel zu anderen Fahrzeugen mit den benötigten Positionsdaten versorgt werden. Beispielsweise kann der/die Fahrerln die Positionsdaten der ihm/ihr zugeteilten Route jeweils vor Dienstantritt mittels einer zu dieser Route gehörenden Magnetkarte, Disc oder dergleichen in den Bordcomputer des Fahrzeuges laden.

Nachfolgend wird die Erfindung anhand eines figürlich dargestellten Ausführungsbeispiels näher erläutert.

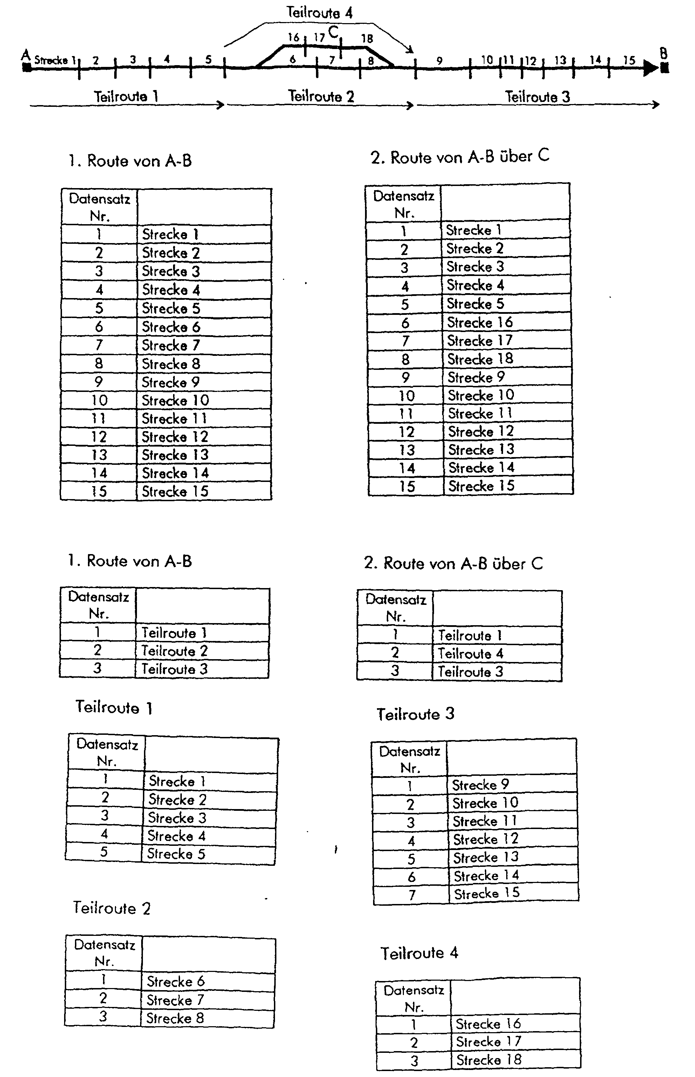

Die Figur zeigt schematisch eine Routenaufteilung in Verbindung mit illustrierenden Tabellen.

Dargestellt sind zwei Routen, die sich nur in einem mittleren Bereich C voneinander unterscheiden. Beiden Strecken gemeinsam sind die Teilrouten 1 und 3, während im mittleren Bereich C jede Route eine eigene Teilroute 2 bzw. 4 aufweist. Beide Routen verbinden einen Anfangspunkt A und einen Endpunkt B miteinander und bestehen aus jeweils 15 Strecken bzw. 3 Teilrouten, wobei die Streckenunterteilung anhand der Haltestellen vorgenommen werden kann. Die beiden oberen Tabellen veranschaulichen die Datenverwaltung nach dem Stand der Technik. Es ist ersichtlich, daß beide Routen völlig separat und unabhängig voneinander betrachten werden. Die unten stehenden Tabellen kennzeichnen das beanspruchte Verfahren, bei dem eine Teilroutenverwaltung eingeführt wird. Die Teilrouten 1 und 3 stimmen für beide Routen überein. Die genaue Zusammensetzung der Teilrouten ergibt sich aus den 4 untersten Tabellen. Auf diese kann bei der Routenplanung und bei der Routenverwaltung zurückgegriffen werden. Das Einsparpotential hinsichtlich der Datenpflege ist insbesondere bei sehr komplexer Linienführung, wobei die selben Teilrouten von diversen Routen benutzt werden, ganz erheblich.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Vorgabe von Positionsdaten, insbesondere geographischen Koordinaten, für mehrere Routen mindestens eines Fahrzeuges des öffentlichen Personen-Nah-Verkehrs,
**dadurch gekennzeichnet**,
• dass die Routen in streckenspezifische (2,4) und gemeinsame Teilrouten (1, 3) aufgeteilt werden, wobei die jenigenTeilrouten (1,3), die bei mindestens 2 Routen identisch sind die, gemeinsamen Teilrouten (1, 3) bilden,
• dass mindestens ein Punkt jeder Teilroute (1, 2, 3, 4) für die Positionsdaten-Vorgabe verwendet wird,
• dass gegebenenfalls mindestens eine Umleitungsstrecke in die Teilroutenbildung einbezogen wird,und
• dass die Positionsdaten in eine Datenbank einer Zentrale und/oder in einen Bordcomputer des Fahrzeuges eingegeben werden.

2. Verfahren nach Anspruch 1, **dadurch gekennzeichnet, dass** der Anfangspunkt und/oder der Endpunkt jeder Teilroute für die Positionsdaten-Vorgabe verwendet wird.

3. Verfahren nach einem der vorangehenden Ansprüche, **dadurch gekennzeichnet, dass** bei schienengebundenen Routen die Position von Weichen für die Positionsdaten-Vorgabe verwendet wird.

4. Verfahren nach einem der vorangehenden Anspruchs, **dadurch gekennzeichnet, dass** die Positionsdaten einer Route, ggf. inklusive Umleitungsstrecke(n) mittels eines mobilen Datenspeichers, insbesondere einer Magnetkarte oder einer Disc, in den Bordcomputer des Fahrzeuges eingegeben werden.

5. Verfahren nach Anspruch 4, **dadurch gekennzeichnet, dass** die Positionsdaten jeder Route, ggf. inklusive Umleitungsstrecke(n) in jeweils einen mobilen Datenspeicher eingeschrieben werden.

## Claims

1. Process for the specification of positional data, in particular geographical coordinates, for several routes of at least one vehicle of the public passenger transport service,
**characterised in that**
• the routes are divided into section-specific partial routes (2, 4) and common partial routes (1, 3), wherein those partial routes (1, 3) that are identical in at least 2 routes form the common partial routes (1, 3)
• at least one point of each partial route (1, 2, 3, 4) is used for the specification of the positional data,
• that if necessary at least one by-pass section is included in the partial route structure, and
• the positional data are entered into a database of a control centre and/or in an on-board computer of the vehicle.

2. Process according to Claim 1, **characterised in that** the starting point and/or the end point of each partial route is used for the specification of the positional data.

3. Process according to one of the preceding Claims, **characterised in that** in rail-bound routes the position of switch points is used for the specification of the positional data.

4. Process according to one of the preceding Claims, **characterised in that** the positional data of a route, if necessary including the by-pass section or sections, are entered in the on-board computer of the vehicle by means of a mobile data memory, in particular a magnetic card or a disc.

5. Process according to Claim 4, **characterised in that** the positional data of each route, if necessary including the by-pass section or sections, are written into a mobile data memory each time.

## Revendications

1. Procédé destiné à prescrire des données de position, notamment des coordonnées géographiques, pour plusieurs itinéraires d'au moins un véhicule de transport en commun urbain ou régional,
**caractérisé**
• **en ce que** les itinéraires sont subdivisés en itinéraires partiels de trajet spécifique (2, 4) et en itinéraires communs (1, 3), les itinéraires partiels (1, 3), qui sont identiques pour au moins deux itinéraires, constituant les itinéraires communs (1, 3),
• **en ce que** l'on utilise au moins un point de chaque itinéraire partiel (1, 2, 3, 4) pour la prescription des données de position,
• **en ce que**, le cas échéant, au moins un trajet de déviation est inclus dans la formation des itinéraires partiels, et
• **en ce que** les données de position sont introduites dans la banque de données d'une centrale de gestion et/ou dans un ordinateur de bord du véhicule.

2. Procédé selon la revendication 1, **caractérisé en ce que** le point de départ et/ou le point d'arrivée de chaque itinéraire partiel est utilisé pour la prescription des données de position.

3. Procédé selon l'une des revendications précédentes,
**caractérisé en ce que** dans le cas d'itinéraires pour véhicules sur rails, on utilise la position d'aiguillages pour la prescription des données de position.

4. Procédé selon l'une des revendications précédentes,
**caractérisé en ce que** les données de position d'un itinéraire, incluant le cas échéant un ou des trajet(s) de déviation, sont introduites dans l'ordinateur de bord du véhicule, au moyen d'une mémoire de données, mobile, notamment d'une carte magnétique ou d'un disque.

5. Procédé selon la revendication **4, caractérisé en ce que** les données de position de chaque itinéraire, incluant le cas échéant un ou des trajet(s) de déviation, sont inscrites respectivement pour chacun des itinéraires dans une mémoire de données mobile.
